# EUROPÄISCHE PATENTSCHRIFT

(11) **EP 0 461 421 B1**
(45) Veröffentlichungstag und Bekanntmachung des Hinweises auf die Patenterteilung: **07.09.1994**
(21) Anmeldenummer: 91108111.5
(22) Anmeldetag: 18.05.1991
(51) Int. Cl.: B60H 1/00

(54) **Heiz- und Belüftungsanlage für Kraftfahrzeuge**
Heating and ventilation device for motor vehicles
Dispositif de chauffage et ventilation pour véhicules automobiles

(30) Priorität: 13.06.1990 DE 4018892
(43) Veröffentlichungstag der Anmeldung: 18.12.1991
(73) Patentinhaber: Behr GmbH & Co., D-70469 Stuttgart (DE)
(72) Erfinder: Bendell, Ian J., W-7256 Moensheim-Appenberg (DE); Klingler, Dietrich, Ing. (grad.), W-7072 Heubach (DE); Schweizer, Gebhard, Dipl.-Ing., W-7250 Leonberg (DE)
(74) Vertreter: Wilhelm & Dauster Patentanwälte European Patent Attorneys

(56) Entgegenhaltungen:
- DE-A- 3 107 324
- FR-A- 1 359 909
- GB-A- 2 168 786
- US-A- 4 440 212

## Beschreibung

Die Erfindung betrifft eine Heiz- und Belüftungsanlage für Kraftfahrzeuge, die mit mindestens einem in einem Gehäuse angeordneten Gebläse, einem in Strömungsrichtung hinter diesem liegenden Mischraum, der über einen ersten Strömungskanal mit dem Gebläse und über einen zweiten Strömungskanal mit einem in einem Bypass zum ersten Strömungskanal liegenden Wärmetauscher in Verbindung steht und in Abhängigkeit von der Stellung einer Luftklappe mit Frischluft und/oder mit Warmluft beaufschlagbar ist, sowie mit Luftleitkanälen ausgerüstet ist, die mit der vom Mischraum kommenden Luft beaufschlagbar sind, durch eine Verteilerklappe zu öffnen oder zu schließen sind und zu im Bereich des Armaturenbrettes angeordneten Austrittsdüsen, insbesondere in der Form einer im Bereich der Mitte des Armaturenbrettes liegenden Mitteldüse und mindestens einer im Seitenbereich desselben angeordneten Seitendüse führen.

Eine Heiz- und Belüftungsanlage dieser Art ist bekannt (DE-A-31 07 324). Bei der bekannten Bauart geht der Mischraum in eine zylindrische Kammer über, von der aus mit Hilfe einer in diesem Raum gelagerten Klappe die Frischluft oder die aufgeheizte Luft, die vom Gebläse gefördert wird, zu Ausströmöffnungen im Fußraum, zu den Entfrosterdüsen oder zu Düsen im Armaturenbrett geleitet wird, je nachdem, wie die Stellung der Klappe ist. Eine unterschiedliche Temperierung der durch die verschiedenen Ausströmdüsen durchströmenden Luft ist bei dieser Bauart nicht möglich, weil die dort vorgesehene schwenkbare Klappe nur eine Verteilerfunktion übernehmen kann. Dies kann dazu führen, daß insbesondere im Winter innerhalb des Fahrgastraumes keine angenehm empfundene Klimatisierung erreicht wird, weil Wärme im Bereich der kalten Seitentüren nach außen abgeführt wird und dies für die Insassen unangenehm empfunden wird.

Bekannt ist es zwar auch (DE-A-33 23 176), einer in der Mitte des Armaturenbrettes vorgesehenen, an sich zur Zuführung von Frischluft gedachten Mitteldüse dadurch Warmluft zuzumischen, daß in dem Luftleitkanal zu der Mitteldüse eine durch eine elastische Ventilklappe geschlossene und hinter einer Trennwand angeordnete Eintrittsöffnung von einem Warmluftbereich aus zugeordnet wird. Die Ventilklappe öffnet sich durch Unterdruck in Abhängigkeit von der im Luftleitkanal zur Mitteldüse herrschenden Strömungsgeschwindigkeit mehr oder weniger. Es ist auf diese Weise möglich, auch der Mitteldüse eine temperierte Luft zuzuführen. Dies ist allerdings nur in Abhängigkeit von der Strömungsgeschwindigkeit aus der Mitteldüse möglich, was nicht immer gewünscht ist.

Der Erfindung liegt die Aufgabe zugrunde, bei einer Heiz- und Belüftungsanlage der eingangs genannten Art eine vom Fahrer oder von anderen Insassen des Fahrzeuges bestimmbare zusätzliche Beheizung der Seitendüsen zu erreichen, ohne daß damit auch eine Temperaturerhöhung an der Mitteldüse oder an den Fußausströmdüsen verbunden sein muß.

Zur Lösung dieser Aufgabe werden bei einer Heiz- und Belüftungsanlage der eingangs genannten Art die kennzeichnenden Merkmale des Patentanspruches 1 vorgesehen. Durch diese Ausgestaltung wird es möglich, durch Öffnung der Steuerklappe, deren Stellung wählbar ist, eine zusätzliche Zufuhr von Warmluft aus dem Bereich unmittelbar hinter dem Wärmetauscher in den Bereich vorzunehmen, der hinter der Verteilerklappe, d.h. in einem Bereich liegt, in dem sonst keine Luftströmung stattfindet. Es wird dadurch möglich, bei entsprechender Stellung der Verteilerklappe gezielt Warmluft vorwiegend dem Luftleitkanal zu den Seitendüsen zuzuleiten, ohne daß die Mitteldüsen oder andere Ausströmdüsen in gleicher Weise mit warmer Luft versorgt werden. Es läßt sich dadurch, insbesondere in der kalten Jahreszeit eine angenehme Atmosphäre im Fahrzeugraum schaffen, weil an den Seitenwänden des Fahrgastraumes ein wärmerer Luftstrom auftrifft als er in der Mitte des Fahrzeuges aus der Heiz- und Belüftungsanlage austritt, so daß die sonst als unangenehm empfundene Wärmeabfuhr auf der Außenseite des Fahrgastraumes kompensiert werden kann.

Eine vorteilhafte Weiterentwicklung des Gegenstandes der Erfindung, bei der dem Mischraum ein zylindrischer Verteilraum nachgeschaltet ist, von dem die Luftleitkanäle ausgehen, sieht vor, daß die Verteilerklappe eine um die Mittelachse des Verteilraumes schwenkbare, diagonal im Verteilraum verlaufende Klappe ist und daß der Bypass in dem Verteilraum in einen Sektor mündet, der in der Stellung von der Verteilerklappe verschlossen ist, in der die Verbindung zwischen Mischraum und Luftleitkanälen voll geöffnet ist. Bei dieser Ausführungsform ist es auch besonders vorteilhaft, wenn der Verteilraum länger als die Verteilerklappe ausgebildet ist und diese an beiden seitlichen Enden Scheiben besitzt, die mit einem dem zylindrischen Verteilraum angepaßten Durchmesser versehen sind. Dadurch wird nämlich der Verteilraum in ein Mittelstück und in zwei seitliche Verteilräume aufgeteilt, so daß es möglich ist, die in den äußeren Verteilräumen strömende Luft in anderer Weise zu steuern als die in die Mitte des Verteilraumes eintretende, von der Verteilerklappe beeinflußte Luft, die nur zur Mitteldüse und zu den Seitendüsen führt.

In besonders einfacher Weise können bei einer solchen Ausführungsform außen an den Scheiben die Klappen zur Steuerung der Defroster- und/oder der Fußraumdüsen angebracht sein, wobei die Scheiben zwischen der Verteilerklappe und den beiden äußeren Klappen die Trennung der Luftsteuerung bewirken. Es ist auch möglich, die äußeren Klappen und die Verteilerklappe unter einem bestimmten Winkelversatz anzuordnen, so daß es dann möglich wird, die Luftströmung im inneren Verteilraum, die zu der Mitteldüse und zu den Seitendüsen führt, abzusperren, ohne daß zum Beispiel die Zufuhr von Warmluft zu den Defrosterdüsen oder zu den Fußraumdüsen unterbrochen ist und umgekehrt.

Die Erfindung ist in der Zeichnung anhand eines Ausführungsbeispieles dargestellt und wird im folgenden erläutert. Es zeigen:
- Fig. 1: eine schematische Darstellung eines Längsschnittes durch eine erfindungsgemäß ausgestaltete Heiz- und Belüftungseinrichtung eines Kraftfahrzeuges, bei der ein zylindrischer Verteilraum für die Luft mit einer drehbar darin angeordneten Verteilerklappe vorgesehen ist,
- Fig. 2: die teilweise perspektivische Darstellung der linken unteren Hälfte des zylindrischen Verteilraumes der Fig. 1 in Richtung des Pfeiles II gesehen,
- Fig. 3: eine perspektivische Teildarstellung des Bereiches oberhalb des zylindrischen Verteilraumes mit der Anordnung der Luftleitkanäle zur Mitte- und zu den Seitendüsen,
- Fig. 4: eine perspektivische Darstellung der erfindungsgemäß ausgestalteten Verteilerklappe,
- Fig. 5: die Darstellung eines Längsschnittes durch die Heiz- und Belüftungsanlage der Fig. 1, jedoch in einer Stellung der Verteilerklappe, bei der zusätzlich Warmluft aus dem Bereich des Wärmetauschers den Luftleitkanälen zu den Seitendüsen zugeführt wird,
- Fig. 6: eine Darstellung ähnlich Fig. 5, jedoch in einer Stellung der Verteilerklappe, in der Zufuhr von Luft zur Mitteldüse und zu den Seitendüsen gesperrt ist und ausschließlich der Defrosterdüse zugeleitet wird und
- Fig. 7: eine Darstellung ähnlich Fig. 5, jedoch in einer Stellung der Verteilerklappe, in der die Luftzufuhr zur Mitteldüse und zu den Seitendüsen gesperrt und ausschließlich zu der Fußraumdüse hin geöffnet ist.

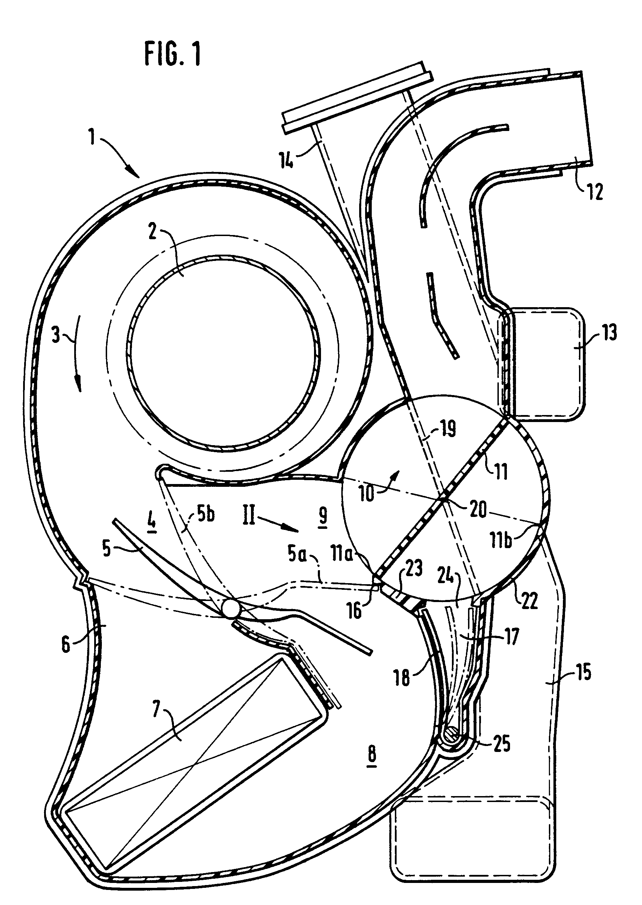

In der Fig. 1 ist ein Gehäuse (1) einer Heiz- und Belüftungsanlage für ein Kraftfahrzeug gezeigt, das aus Kunststoff bestehen kann und in seinem Inneren ein Radialgebläse (2) aufnimmt, das im Betrieb Luft in nicht näher dargestellter Weise aus der Umgebungsluft, insbesondere aus dem Bereich unterhalb der nicht dargestellten Windschutzscheibe ansaugt und diese im Sinn des Pfeiles (3) einem ersten Strömungskanal (4) zuführt, der durch eine Schwenkklappe (5) von der Zufuhr der Gebläseluft ganz oder teilweise abgeschnitten werden kann. Im Bereich der dem Gebläse (2) zugewandten Endkante der Schwenkklappe (5) beginnt ein Bypasskanal (6) zu einem Raum, in dem ein Wärmetauscher (7) angeordnet ist, der über einen zweiten, beim Ausführungsbeispiel um den Wärmetauscher (7) herumgelenkten Strömungskanal (8) in einen Mischraum (9) übergeht, in den auch der erste Strömungskanal (4) mündet. Der zweite Strömungskanal (8) ist vom Mischraum (9) durch den vom Gebläse (2) abgewandten Teil der Schwenkklappe (5) getrennt, wenn die Schwenkklappe ihre Lage (5a) einnimmt. In dieser Lage ist auch der Bypasskanal (6) zum Wärmetauscher (7) vom Gebläse (2) abgeschnitten. In einer zweiten Endstellung (5b) gibt die Schwenkklappe die Luftzufuhr vom Gebläse (2) zum Wärmetauscher (7) vollständig frei und sperrt den Mischraum gegenüber dem vom Gebläse (2) unmittelbar kommenden Strömungskanal (4), der Frischluft führt.

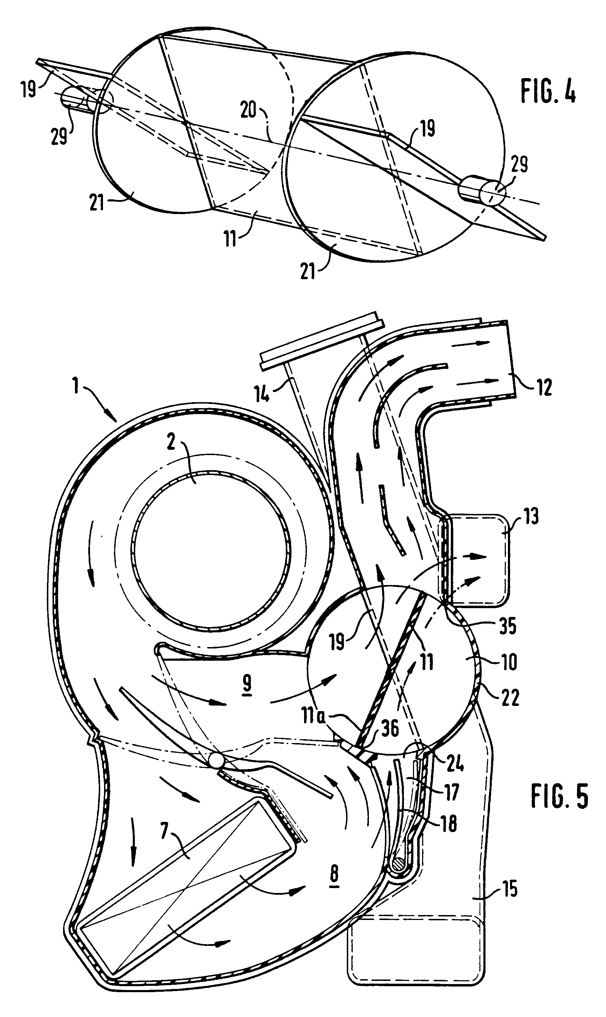

Hinter dem Mischraum (9) ist ein zylindrischer Verteilraum (10) vorgesehen, in dem koaxial eine Verteilerklappe (11) drehbar angeordnet ist, die im einzelnen in der Fig. 4 gezeigt ist. Vom Verteilraum (10) aus, der auch seitlich noch über die Verteilerklappe (11) hinausragt, gehen die Luftleitkanäle (12 und 13) sowie (14 und 15) ab, von denen der Luftleitkanal (12) zu einer nicht dargestellten Mitteldüse im Bereich der Mitte des Armaturenbrettes, der Luftleitkanal (13) zu einer oder zu beiden im Bereich der seitlichen Türen am Armaturenbrett angeordneten Seitendüsen, der Luftleitkanal (14) zu der unterhalb der Windschutzscheibe angeordneten Defrosterdüse und der Luftleitkanal (15) zur Fußraum- bzw. Fondraumaustrittsdüse führt. Durch Verstellung der Verteilerklappe (11) wird es möglich, entweder die vom Gebläse kommende Frischluft - in der Stellung der Schwenkklappe (5a) - oder - in der Stellung der Schwenkklappe (5b) - nur Warmluft und in einer Zwischenstellung der Schwenkklappe (5) teilweise aufgeheizte Luft auf die verschiedenen Düsen zu verteilen. Die Verteilerklappe (11) kann dabei alle Stellungen zwischen den beiden Endstellungen (11a und 11b) einnehmen, die in der Fig. 1 jeweils an den dann vorhandenen Positionen des in der Fig. 1 links unten im Bereich der rechten Seite der Mündung des zweiten Strömungskanales (8) gezeigten Endes (11a) zugeordnet sind. In der in der Fig. 1 gezeigten Stellung der Verteilerklappe (11) liegt dieses Ende (11a) auch an der gegenüberliegenden Seite der Dichtkante (16), an der die Schwenkklappe (5) mit ihrem rechten Teil dichtend anliegt, wenn sie die Stellung (5a) einnimmt.

Zwischen dem zweiten Strömungskanal (8), der vom Wärmetauscher (7) kommt, und dem Verteilraum (10) verläuft ein Bypasskanal (17), der in der Fig. 1 durch eine Schwenkklappe (18) geschlossen ist. Der Bypasskanal (17) mündet in den Verteilraum (10) im Bereich eines Sektors der zylindrischen Wandung des Verteilraumes (10), der in der dargestellten Lage, d.h. in der Stellung der Verteilerklappe (11), in der die Öffnung zwischen Mischraum (9) und den Luftleitkanälen (12 und 13) vollkommen geöffnet ist, auf der vom Mischraum (9) abgewandten und abgeschlossenen Seite liegt.

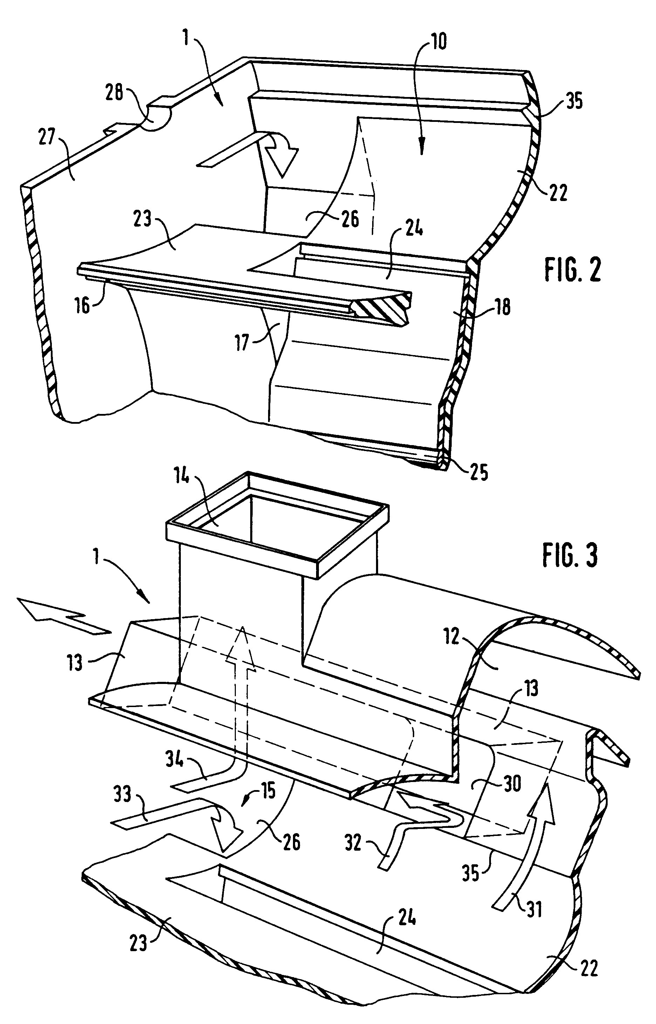

Wie die Fig. 1 andeutungsweise zeigt, die Fig. 4 dagegen deutlich, ist die Verteilerklappe (11) noch mit zwei weiteren von ihr jeweils nach außen versetzten Klappenteilen (19) versehen, die gegenüber dem mittleren Teil der Verteilerklappe (11) durch eine senkrecht zur Schwenkachse (20) der Verteilerklappe (11) verlaufende, eine Trennwand bildende Scheibe (21) abgeteilt sind. Die Verteilerklappe (11), die Scheiben (21), die Klappen (19) und die Lagerzapfen (29) sind dabei zu einem beispielsweise aus Kunststoff bestehenden einstückigen Teil zusammengefaßt. Die Fig. 2 und die Fig. 3, in denen die Verteilerklappe (11) nicht gezeigt ist, um die Übersichtlichkeit zu erhalten, zeigen den Sinn dieser zusätzlichen Klappenteile (19) und der Scheiben (21).

Die Fig. 2 zeigt, daß der Verteilraum (10), der gemäß Fig. 1 insgesamt einen zylindrischen Querschnitt aufweist, in seinem mittleren Bereich von einer hinteren Gehäusewand (22) begrenzt ist, die in ein seitlich über sie hinausragendes Wandstück (23) übergeht, das mit der Dichtkante (16) versehen ist. In dem Wandstück (23) ist die Öffnung (24) vorgesehen, vor der das freie Ende der Schwenkklappe (18) bewegbar ist, die an dem von der Öffnung (24) abgewandten Ende um eine Achse (25) schwenkbar ist. Es ist aus Fig. 2 zu erkennen, daß links neben der kreiszylinderschalenförmigen Wand (22) nach unten eine Öffnung (26) verbleibt, die zu dem Luftleitkanal (15) zu den Fußraumdüsen führt. Da in der Fig. 2 nur die Hälfte des unteren Teiles des Gehäuses dargestellt ist, die symmetrisch zu der anderen Hälfte ist, ist klar, daß auf der rechten Seite der Wand (22) eine eben solche Öffnung (26) verbleibt und daß das Gehäuse (1) auf beiden Seiten jeweils durch eine Abschlußwand (27) geschlossen ist, die an dem Wandteil (23) anliegt und eine Lagerausnehmung (28) für die aus Fig. 4 ersichtlichen Lagerzapfen der Verteilerklappe (11) aufweist.

Die Fig. 3 zeigt, daß sich das Gehäuse (1) auch oberhalb des Wandteiles (22) fortsetzt und zu dem Luftleitkanal (12) zu der Mitteldüse einerseits offen ist und im Bereich der Wand (22) auch noch mit einer Eintrittsöffnung (30) zu dem Luftleitkanal (13) versehen ist, der jeweils zur Seite hin zu den Seitendüsen führt. Erkennbar ist auch die Öffnung (26) zum Luftleitkanal (15) und nach oben seitlich oberhalb der Öffnung (26) die Verbindung zum Luftleitkanal (14), der zu den Defrosterdüsen führt. Auch in der Fig. 3 ist schematisch nur etwa die Hälfte des Gehäuses (1) gezeigt. Sie setzt sich symmetrisch nach der anderen Seite fort, so daß klar wird, daß auch nach der anderen Seite ein Luftleitkanal (13) zu einer Seitendüse und ein Luftleitkanal (14) zu einer Defrosterdüse vorgesehen ist.

Wenn die Verteilerklappe (11) der Fig. 4 in das so ausgestaltete Gehäuse gemäß den Fig. 1 bis 3 eingesetzt ist, dann ist die Ausgestaltung so getroffen, daß die beiden Scheiben (21) noch im Bereich der Wand (22) anliegen, um so die Luftzuführung im Sinne der Pfeile (31) zu der Mitteldüse bzw. (32) zu den Seitendüsen (s. Fig. 3) von der Luftzuführung zu den Luftleitkanälen (14 und 15) im Sinne der Pfeile (33 und 34) abzutrennen. Die Luftsteuerung zu den Luftleitkanälen (12 und 13) erfolgt daher mit dem mittleren Teil der Verteilerklappe (11), während die Luftzufuhr zu den Luftleitkanälen (15 und 14) durch die jeweils seitlich angeordneten Klappen (19) erfolgt, die beim Ausführungsbeispiel unter einem Winkel von 30° gegenüber dem Mittelteil der Verteilerklappe (11) geneigt angeordnet sind. Aufgrund dieser Ausgestaltung wird es möglich, in verhältnismäßig einfacher Weise die Luftzufuhr zur Mittel- und zu den Seitendüsen bei bestimmten Stellungen unabhängig von der Luftzuführung zu den Defroster- und Fußraumdüsen zu steuern. Zusätzlich wird es wegen der Anordnung des Bypasskanales (17) und der Schwenkklappe (18) auch möglich, den Bereich des Verteilraumes (10), der in dem in Fig. 1 geschlossenen Sektor und im Bereich der Wand (22) liegt, mit Warmluft zu beaufschlagen, die dem zweiten Strömungskanal (8) hinter dem Wärmetauscher (7) unmittelbar entzogen wird.

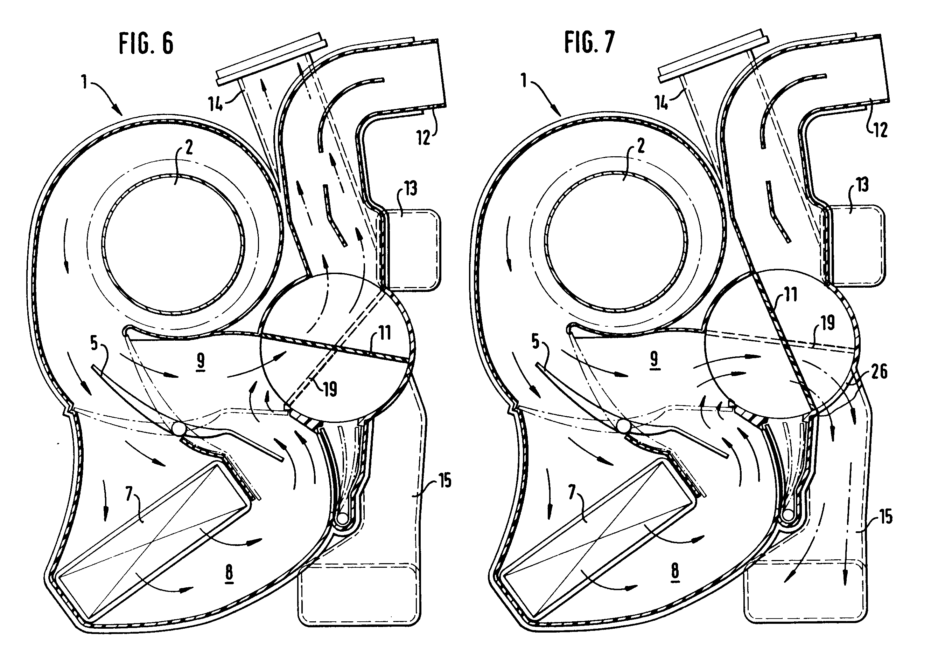

Die erfindungsgemäße Ausgestaltung ergibt die in den Fig. 5, 6 und 7 gezeigten und erläuterten Beaufschlagungsmöglichkeiten, darüber hinaus sind aber auch noch Zwischenstellungen möglich. Die Stellung der Verteilerklappe (11) in der Fig. 1 entspricht, wie bereits ausgeführt, der ersten Endstellung. In dieser Stellung ist die Zufuhr von Frischluft oder Mischluft durch den Mischraum (9) in den Verteilraum (10) im Bereich des mittleren Teiles der Verteilerklappe (11), d.h. im Bereich der Wand (22) voll geöffnet. Die je nach Stellung der Schwenkklappe (5) sich im Mischraum (9) befindende mehr oder weniger aufgewärmte Luft kann daher ungehindert in die Luftleitkanäle (12 und 13), d.h. zu der Mitteldüse und zu den Seitendüsen strömen. Die aus den Seitendüsen und aus der Mitteldüse austretende Luft ist aber gleich temperiert.

Die seitlichen Klappen (19) der Verteilerklappe (11) schließen in dieser Stellung die Zufuhr von Luft zu den Luftleitkanälen (14 und 15), d.h. zu den Defrosterdüsen und zu den Fußraumdüsen ab.

Die Fig. 6 zeigt die andere Endstellung der Verteilerklappe (11). Hier ist erkennbar, daß der mittlere Teil der Verteilerklappe die Zufuhr von Luft zu den Luftleitkanälen (12 und 13) vollkommen abschließt, während die seitlichen Luftleitklappen (19) in dieser Stellung, in der sie schräg vom Mischraum (9) aus nach oben weisen, die Luftzufuhr ausschließlich zu den Defrosterdüsen ermöglicht. Befindet sich daher die Temperaturregelklappe in ihrer Stellung (5b), dann kann Warmluft zu den Defrosterdüsen geleitet werden. Die entsprechende andere Stellung der Verteilerklappe (11) zeigt Fig. 7. Auch hier schließt der mittlere Teil der Verteilerklappe (11) die Zufuhr von Luft zu den Luftleitkanälen (12 und 13) ab, während die seitlichen Klappen (19) in dieser Stellung, in der sie vom Mischraum (9) leicht nach unten gerichtet sind, die vom Mischraum kommende Luft in den Luftleitkanal (15) (durch die Öffnung 26) führen.

In allen diesen Fällen kommt es nicht darauf an, ob die Schwenkklappe (18) des Bypasskanales (17) geöffnet oder geschlossen ist. Sie erlangt aber Bedeutung bei einer Stellung der Verteilerklappe (11) gemäß Fig. 5. Hier wird erkennbar, daß die seitlichen Klappen (19) die Luftzufuhr zu den Luftleitkanälen (14 und 15) abschließen, während der mittlere Teil der Verteilerklappe (11) die Luftzufuhr aus dem Mischraum (9) zu den Luftleitkanälen (12 und 13) frei gibt. Da der mittlere Teil der Verteilerklappe (11) in dieser Stellung aber mit seinem rechten oberen Ende über die Dichtkante (35) des Wandteiles (22) hinaus bewegt ist, wird in dieser Stellung auch eine Verbindung geöffnet zwischen dem gegenüber der Stellung nach Fig. 1 verschlossenen Sektor des Verteilraumes (10) zu den Luftleitkanälen (12 und 13) einerseits und zu dem Bypasskanal (17) andererseits. Wird in dieser Stellung daher die Schwenkklappe (18) voll oder, wie gezeichnet, nur teilweise geöffnet, dann kann nicht nur Mischluft aus dem Mischraum (9), sondern auch unmittelbar hinter dem Wärmetauscher aus dem Strömungskanal (8) abgezweigte heiße Luft durch den Verteilraum (10) zu den Eintrittsöffnungen zu den Luftleitkanälen (12 und 13) geführt werden und sie wird, da sie mehr den Öffnungen des Luftleitkanales (13) als jener des Luftleitkanales (12) zugeführt ist, auch vorwiegend in diesen Luftleitkanal (13) eintreten und damit die zu den Seitendüsen strömende Luft mehr erwärmen als dies bei der Austrittsluft aus der Mitteldüse der Fall ist. Diese Stellung der Verteilerklappe (11) wird daher in der kalten Jahreszeit gewählt werden, wenn auf das Ausströmen von Luft aus den Fußraumdüsen oder aus den Defrosterdüsen verzichtet werden soll. Wird die Verteilerklappe (11) aus der
in der Fig. 5 gezeigten Stellung noch um einen kleinen Winkel im Gegenuhrzeigersinn gedreht, und zwar so weit, daß die untere Kante (11a) des mittleren Teiles der Verteilerklappe (11) den Punkt (36) an der linken Seite der Öffnung (24) erreicht, dann kann zusätzlich auch Luft aus dem Mischraum zu den Defroster- und Fußraumdüsen geführt werden. Auch in diesem Fall kann der Luftleitkanal (13) zu den Seitendüsen bei geöffneter Schwenkklappe (18) mit zusätzlicher Warmluft aus dem Strömungskanal (8) beaufschlagt bleiben.

Bei allen Stellungen ist bei der bisher beschriebenen Ausführungsform wegen der entsprechenden Anordnung der Seitenscheiben (21), die dicht an den Wandteilen (22 und 23) anliegen, die Zufuhr von zusätzlicher Warmluft durch den Bypasskanal (17) bei geöffneter Schwenkklappe (18) nur in den Bereich des mittleren Teiles der Verteilerklappe (11) und damit im wesentlichen nur zu den Luftleitkanälen (12 und 13) möglich. Werden die Seitenscheiben (21) aber in einen Bereich verlegt, der innerhalb der Wandung (22) liegt, oder wird die Öffnung (24) entsprechend länger ausgelegt, so daß sie auch in den Bereich der Öffnung (26) mit hereinragt, dann ist es auch möglich, eine zusätzliche Erwärmung von Defroster- und/oder Fußraumdüsen über den Bypasskanal (17) zu erreichen, wenn dies gewünscht sein sollte.

## Patentansprüche

1. Heiz- und Belüftungsanlage für Kraftfahrzeuge, die mit mindestens einem in einem Gehäuse (1) angeordneten Gebläse (2), einem in Strömungsrichtung hinter diesem liegenden Mischraum (9), der über einen ersten Strömungskanal (4) mit dem Gebläse und über einen zweiten Strömungskanal (8) mit einem in einem Bypass zum ersten Strömungskanal liegenden Wärmetauscher (7) in Verbindung steht und in Abhängigkeit von der Stellung einer Luftklappe (5) mit Frischluft und/oder mit Warmluft beaufschlagbar ist, sowie mit Luftleitkanälen (12, 13, 14, 15) ausgerüstet ist, die mit der vom Mischraum kommenden Luft beaufschlagbar sind, durch eine Verteilerklappe (11) zu öffnen oder zu schließen sind und zu im Bereich des Armaturenbrettes angeordneten Austrittsdüsen führen, dadurch gekennzeichnet, daß in den mit der Verteilerklappe (11) versehenen Verteilraum (10) ein Bypasskanal (17) mündet, der unmittelbar von dem zweiten Strömungskanal (8) abzweigt und durch eine Schwenkklappe (18) verschließbar ist.

2. Heiz- und Belüftungsanlage nach Anspruch 1, dadurch gekennzeichnet, daß der Bypasskanal (17) auf der Seite in den Verteilraum (10) mündet, die in der Stellung, in der die Luftzufuhr vom Mischraum (9) zu den Luftleitkanälen (12 und 13) vollständig geöffnet ist, abgeschlossenen Seite mündet.

3. Heiz- und Belüftungsanlage nach Anspruch 1, dadurch gekennzeichnet, daß als Austrittsdüsen eine im Bereich der Mitte des Armaturenbrettes liegende Mitteldüse und mindestens eine im Seitenbereich desselben liegende Seitendüse vorgesehen sind.

4. Heiz- und Belüftungsanlage nach Anspruch 3, dadurch gekennzeichnet, daß die Mündung (30) des Luftleitkanales (13) zu den Seitendüsen in der Öffnungsrichtung der Verteilerklappe (11) hinter der Mündung des Luftleitkanales (12) zu der Mitteldüse liegt, so daß Luft vom Bypasskanal (17) auf der vom Mischraum (9) abgewandten Seite der Verteilerklappe (11) unmittelbar vom Strömungskanal (8) hinter dem Wärmetauscher (7) zu der Mündung (30) des Luftleitkanales (13) geführt werden kann.

5. Heiz- und Belüftungsanlage nach Anspruch 1 oder einem der anderen Ansprüche, dadurch gekennzeichnet, daß der Verteilraum im wesentlichen zylindrisch ausgebildet ist, daß von ihm alle Luftleitkanäle ausgehen und daß die Verteilerklappe (11) eine um die Mittelachse (20) des Verteilraumes (10) schwenkbare, diagonal im Verteilraum verlaufende Klappe ist und daß der Bypass in den Sektor des Verteilraumes (10) mündet, der in der Stellung der Verteilerklappe (11) verschlossen ist, in der die Verbindung zwischen Mischraum (9) und Luftleitkanälen (12, 13) voll geöffnet ist.

6. Heiz- und Belüftungsanlage nach Anspruch 4, dadurch gekennzeichnet, daß die Verteilerklappe (11) aus einem mittleren, durch seitliche Scheiben (21) begrenzten Teil (11) besteht, der kürzer als der Verteilraum (10) ist und daß die Scheiben (21) einen dem zylindrischen Verteilraum angepaßten Durchmesser aufweisen.

7. Heiz- und Belüftungsanlage nach Anspruch 5, dadurch gekennzeichnet, daß beiderseits des mittleren Teiles der Verteilerklappe (11) an den Scheiben (21) Klappen (19) zur Steuerung der Defroster- und Fußraumdüsen angebracht sind und daß diese äußeren Klappen (19) unter einem Winkel gegenüber dem inneren Teil der Verteilerklappe (11) geneigt angeordnet sind.

8. Heiz- und Belüftungsanlage nach Anspruch 7, dadurch gekennzeichnet, daß die Verteilerklappe (11), die Scheiben (21) und die Klappen (19) Teile einer einstückigen Klappe sind.

9. Heiz- und Belüftungsanlage nach Anspruch 7, dadurch gekennzeichnet, daß die Mündungen zu den Luftleitkanälen (12, 13 bzw. 14, 15) in den Verteilraum jeweils so angeordnet sind, daß sie sich über einen Winkelbereich von ca. 50° bis ca. 70° erstrecken und daß die Klappen (19) gegenüber dem mittleren Teil der Verteilerklappe (11) um den gleichen Winkel versetzt sind.

10. Heiz- und Belüftungsanlage nach Anspruch 1, dadurch gekennzeichnet, daß die Schwenkklappe (18) als eine an einem Ende um eine Achse (25) schwenkbare Klappe ausgebildet ist.

## Claims

1. Heating and aeration system, for motorized vehicles, which is fitted with at least one fan blower disposed in a housing, a mixing area which is behind this fan blower in relation to the direction of flow, the said mixing area being connected with the said fan blower, by means of a first flow tube, and being connected to a heat exchanger which is positioned in a bypass channel to a said first flow tube, by means of a second flow tube, it being possible for cool and/or hot air, in accordance with a position of an air-flap, to be applied to the said mixing area, and is also fitted with air-feed-pipes which can have air coming from the said mixing space applied to them and are opened or closed by means of a distribution flap and which lead to outlet jets disposed in a dashboard area, wherein a bypass channel (17) opens into a distribution space (10) which is provided with a distribution flap (11), the said bypass channel branching directly off from a second flow channel (8) and being closable by means of a swivelling flap (18).

2. Heating and aeration system in accordance with claim 1, wherein a bypass channel (17) opens into a distribution space (10) in an area of a section of cylindrical casing of this distribution space (10) in a position of a distribution flap (11) in which an opening, on a closed side facing away from a mixing space (9), between a mixing space (9) and air-feed-tubes (12 and 13) is fully open.

3. Heating and aeration system in accordance with claim 1, wherein outlet jets are in the form of central jets positioned in a central dashboard area and at least one side jet disposed in a side area of a said dashboard.

4. Heating and aeration system in accordance with claim 3, wherein an opening (30) of an air-feed-channel (13) to lateral jets lies in the direction of opening of a distribution flap (11) behind an opening of an air-feed-channel (12) to a central air-jet, such that air from a bypass channel (17) can be directed to a said opening (30) of a said air-feed-channel (13) on the side, of a distribution flap (11), which faces away from a mixing space (9).

5. Heating and aeration system in accordance with claim 1 or any one of the other claims, wherein a distribution space is developed such that it is essentially cylindrical, all air-feed-channel go out from it, and a distribution flap (11) is a flap which swivels about the central axis (20) of a said distribution space (10), and which runs diagonally in a said distribution space, and a bypass channel opens into a section of the distribution space (10) which is closed in the position of the said distribution flap (11) in which a connection between a mixing space (9) and air-feed-channels (12, 13) is fully open.

6. Heating and aeration system in accordance with claim 4, wherein a distribution flap (11) comprises a central section (11), bordered by lateral discs (21), which is shorter than a distribution space (10) and the said discs (21) have a diameter which is fitted to that of the said distribution space.

7. Heating and aeration system in accordance with claim 5, wherein flaps (19) for controlling defroster jets and jets in foot-space are attached on both sides of a central section of a distribution flap (11), on discs (21) and these outer flaps (19) are disposed at an angle in relation to the inner section of a distribution flap (11).

8. Heating and aeration system in accordance with claim 7, wherein a distribution flap (11), discs (21) and flaps (19) are members of a flap which forms a single piece.

9. Heating and aeration system in accordance with claim 7, wherein openings to air-feed-channels (12, 13, or 14, 15) are respectively disposed in a distribution space such that they extend through an angular sector of approximately 50° to approximately 70° and flaps (19) are shifted about the same angle in relation to a central section of a distribution flap (11).

10. Heating and aeration system in accordance with claim 1, wherein a swivelling flap (18) is developed as a flap which can swivel about an axis (25) on an end.

## Revendications

1. Système de chauffage et de ventilation pour véhicules automobiles, système qui est muni d'au moins un ventilateur (2) disposé dans un boîtier (1), d'un espace de mélange (9) situé derrière ce ventilateur dans le sens d'écoulement, qui communique par un premier canal d'écoulement (4) avec le ventilateur et par un second canal d'écoulement (8) avec un échangeur de chaleur (7) situé dans une dérivation par rapport au premier canal d'écoulement, espace auquel peuvent être envoyés, en fonction de la position d'un clapet d'air (5), de l'air frais et/ou de l'air chaud, ainsi que de canaux de guidage d'air (12, 13, 14, 15) auxquels peut être envoyé l'air venant de l'espace de mélange par l'ouverture ou la fermeture d'un clapet distributeur (11) et qui mènent à des buses de sortie placées dans la zone du tableau de bord, caractérisé en ce qu'un canal de dérivation (17), partant directement en dérivation du second canal d'écoulement (8) et pouvant être fermé par un clapet pivotant (18), débouche dans l'espace de distribution (10) pourvu du clapet distributeur (11).

2. Système de chauffage et de ventilation selon la revendication 1, caractérisé en ce que le canal de dérivation (17) débouche dans l'espace de distribution (10) par le côté qui est fermé à la position dans laquelle l'amenée d'air depuis l'espace de mélange (9) aux canaux de guidage d'air (12 et 13) est complètement ouverte.

3. Système de chauffage et de ventilation selon la revendication 1, caractérisé en ce que le buses de sortie comprennent une buse centrale située dans la zone du milieu du tableau de bord et au moins une buse latérale située dans une zone latérale de celui-ci.

4. Système de chauffage et de ventilation selon la revendication 3, caractérisé en ce que l'embouchure (30) du canal de guidage d'air (13) menant aux buses latérales est située derrière l'embouchure du canal de guidage d'air (12) menant à la buse centrale, dans le sens de l'ouverture du clapet distributeur (11), de sorte que l'air venant du canal de dérivation (17) et atteignant le côté du clapet distributeur (11) éloigné de l'espace de mélange (9) peut être guidé directement depuis le canal d'écoulement (8) derrière l'échangeur de chaleur (7) à l'embouchure (30) du canal de guidage d'air (13).

5. Système de chauffage et de ventilation selon la revendication lou l'une des autres revendications, caractérisé en ce que l'espace de distribution est essentiellement cylindrique, que tous les canaux de guidage d'air partent de cet espace, que le clapet distributeur (11) est un clapet pivotant autour de l'axe central (20) de l'espace de distribution (10) et orienté diagonalement dans cet espace, et que le canal de dérivation débouche dans le secteur de l'espace de distribution (10) qui est fermé dans la position qu'occupe le clapet distributeur (11) quand la liaison entre l'espace de mélange (9) et les canaux de guidage d'air (12, 13) est entièrement ouverte.

6. Système de chauffage et de ventilation selon la revendication 4, caractérisé en ce que le clapet distributeur (11) comprend une partie centrale (11) délimitée par des disques latéraux (21) et qui est plus courte que l'espace de distribution (10), et que les disques (21) possèdent un diamètre adapté à l'espace cylindrique de distribution.

7. Système de chauffage et de ventilation selon la revendication 5, caractérisé en ce que des clapets (19), destinés à la commande des buses de dégivrage et des buses installées dans l'espace pour les pieds, sont placés des deux côtés de la partie centrale du clapet distributeur (11) sur les disques (21) et que ces clapets extérieurs (19) sont orientés sous un certain angle par rapport à la partie intérieure du clapet distributeur (11).

8. Système de chauffage et de ventilation selon la revendication 7, caractérisé en ce que le clapet distributeur (11), les disques (21) et les clapets (19) sont des parties d'un clapet d'un seul tenant.

9. Système de chauffage et de ventilation selon la revendication 7, caractérisé en ce que les embouchures menant aux canaux de guidage d'air (12, 13 ou 14, 15) sont chacune disposées dans l'espace de distribution de manière qu'elles s'étendent sur une zone angulaire d'environ 50° à environ 70°, et que les clapets (19) sur les disques sont décalés du même angle par rapport à la partie centrale du clapet distributeur (11).

10. Système de chauffage et de ventilation selon la revendication 1, caractérisé en ce que le clapet pivotant (18) est réalisé comme un clapet monté pivotant autour d'un axe (25) à une extrémité.
